# EUROPEAN PATENT APPLICATION

(11) **EP 4 151 531 A1**
(43) Date of publication of application: **22.03.2023**
(21) Application number: 22194169.3
(22) Date of filing: 06.09.2022
(51) Int. Cl.: B64D 25/14

(54) **CONVERTIBLE SLIDE-RAFT**

(30) Priority: 17.09.2021 IN 202141042134; 06.06.2022 US 202217833679
(71) Applicant: Goodrich Corporation, Charlotte, NC 28217-4578 (US)
(72) Inventor: SHIVAPPA, Chethana, 560060 Bangalore, Karnataka (IN); VENKATACHALA, Adithya Nagara, 577201 Shivamogga, Karnataka (IN)
(74) Representative: Dehns

(57) **Abstract**

An inflatable slide-raft (100) may include a primary inflatable structure (102) configured to inflate upon deployment of the inflatable slide-raft (100), a first secondary inflatable structure (140) coupled to the primary inflatable structure (102), and a second secondary inflatable structure (142) coupled to the primary inflatable structure (102). The first secondary inflatable structure (140) and the second secondary inflatable structure siderail are configured to remain in a stowed state when the inflatable slide-raft (100) is operated in a slide mode and to inflate when the inflatable slide-raft (100) is operated in a raft mode.

## Description

### CROSS-REFERENCE TO RELATED APPLICATIONS

This application claims priority to, and the benefit of, India Patent Application No. 202141042134, filed September 17, 2021 (DAS Code E99C) and titled "CONVERTIBLE SLIDE-RAFT".

### FIELD

The present disclosure relates to aircraft evacuation systems and, in particular, to inflatable slide-rafts.

### BACKGROUND

Emergency evacuation systems, including inflatable evacuation slides, may be used to exit an aircraft absent a jetway or other suitable means of egress for passengers. The inflatable slide may deploy, for example, from the side of an aircraft fuselage. In the event of a water landing, the inflatable slide may be employed as a life raft. These inflatable "slide-rafts" are designed to meet various safety and regulatory requirements. For example, when operating as a slide (e.g., during a non-water landing), the length of the inflatable is selected to maintain a safe slide angle, relative to the exit surface, and the width of the inflatable is generally determined by the number of passengers that may evacuate through the aircraft door. However, because the inflatable also operates as a life raft, the inflatable needs to be designed to meet life raft capacity and freeboard requirements. The length and the width needed to meet the life raft capacity and freeboard requirements tend to be greater than the length and the width needed for safe slide operation (e.g., for safe operation during a non-water landing). In this regard, current slide-rafts are generally designed with a greater footprint (e.g., surface area) than is necessary to meet the requirements for safe operation in slide mode. The greater surface area results in a greater inflatable volume, which in turn leads to larger pressurized fluid sources and larger pack volume and overall evacuation system footprint and increased evacuation system weight.

### SUMMARY

An inflatable slide-raft is disclosed herein. In accordance with various embodiments, the inflatable slide-raft may comprise a primary inflatable structure including a head rail, a toe rail, a first siderail, and a second siderail. A first secondary inflatable structure is coupled to the first siderail. The first secondary inflatable structure is fluidly sealed from the first siderail. A second secondary inflatable structure is coupled the second siderail. The second secondary inflatable structure is fluidly sealed from the second siderail and the first secondary inflatable structure.

In various embodiments, the first secondary inflatable structure comprises a first longitudinal tube extending generally parallel to the first siderail, a first lateral tube fluidly coupled to the first longitudinal tube, and a first support tube extending between the first longitudinal tube and the first siderail. The first support tube is fluidly coupled to the first longitudinal tube.

In various embodiments, the second secondary inflatable structure comprises a second longitudinal tube extending generally parallel to the second siderail, a second lateral tube fluidly coupled to the second longitudinal tube, and a second support tube extending between the second longitudinal tube and the second siderail. The second support tube is fluidly coupled to the second longitudinal tube.

In various embodiments, the first lateral tube is attached to the second longitudinal tube, and the second lateral tube is attached to the first longitudinal tube. In various embodiments, the first secondary inflatable structure further comprises a first support structure coupled between the first longitudinal tube and the first siderail, and the second secondary inflatable structure further comprises a second support structure coupled between the second longitudinal tube and the second siderail. The first support structure is configured to be drawn taught in response to inflation of the first secondary inflatable structure. The second support structure is configured to be drawn taught in response to inflation of the second secondary inflatable structure.

In various embodiments, a first releasable connection is coupled between the primary inflatable structure and the first secondary inflatable structure. A second releasable connection is coupled between the primary inflatable structure and the second secondary inflatable structure. In various embodiments, a first portion of the first releasable connection is coupled to the first siderail and a second portion the first releasable connection is coupled to the first secondary inflatable structure.

An evacuation system is also disclosed herein. In accordance with various embodiments, the evacuation system comprises an inflatable slide-raft, a primary inflation source, and a first secondary inflation source. The inflatable slide-raft includes a primary inflatable structure, a first secondary inflatable structure, and a second secondary inflatable structure. The primary inflatable structure includes a head rail, a toe rail, a first siderail, and a second siderail. The first secondary inflatable structure is coupled to the first siderail and fluidly sealed from the first siderail. The second secondary inflatable structure is coupled the second siderail an fluidly sealed from the second siderail and the first secondary inflatable structure. The primary inflation source is fluidly coupled to the primary inflatable structure. The first secondary inflation source is fluidly coupled to at least one of the first secondary inflatable structure and the second secondary inflatable structure.

In various embodiments, the first secondary inflatable structure comprises a first longitudinal tube extending generally parallel to the first siderail, a first lateral tube fluidly coupled to the first longitudinal tube, and a first support tube extending between the first longitudinal tube and the first siderail. The first support tube is fluidly coupled to the first longitudinal tube. The second secondary inflatable structure comprises a second longitudinal tube extending generally parallel to the second siderail, a second lateral tube fluidly coupled to the second longitudinal tube, and a second support tube extending between the second longitudinal tube and the second siderail. The second support tube is fluidly coupled to the second longitudinal tube.

In various embodiments, a second secondary inflation source is fluidly coupled to the second secondary inflatable structure and the first secondary inflation source is configured to inflate the first secondary inflatable structure. In various embodiments, the first secondary inflation source and the second secondary inflation source each comprises a solid gas generating material.

In various embodiments, an actuator is operably coupled to the first secondary inflation source. In various embodiments, a cord is configured to manually actuate the actuator.

In various embodiments, an actuator controller is configured to send actuation commands to the actuator. A water sensor is in communication with the actuator controller. In various embodiments, the primary inflation source is configured to begin inflating the primary inflatable structure in response to deployment of the inflatable slide-raft, and the first secondary inflation source is configured to begin inflating the at least one of the first secondary inflatable structure and the second secondary inflatable structure in response to actuation of the actuator.

In accordance with various embodiments, an evacuation system may comprise an inflatable slide-raft including a primary inflatable structure, a first secondary inflatable structure, and a second secondary inflatable structure. The primary inflatable structure is configured to inflate upon deployment of the inflatable slide-raft. The first secondary inflatable structure is coupled to the primary inflatable structure. The second secondary inflatable structure is coupled to the primary inflatable structure. The first secondary inflatable structure and the second secondary inflatable structure are configured to remain in a stowed state when the inflatable slide-raft is operated in a slide mode and to inflate when the inflatable slide-raft is operated in a raft mode.

In various embodiments, a primary inflation source is fluidly coupled to the primary inflatable structure, and a first secondary inflation source is fluidly coupled to at least one of the first secondary inflatable structure and the second secondary inflatable structure.

In various embodiments, an actuator is operably coupled to the first secondary inflation source. The primary inflation source is configured to begin inflating the primary inflatable structure in response to deployment of the inflatable slide-raft, and the first secondary inflation source is configured to begin inflating the at least one of the first secondary inflatable structure and the second secondary inflatable structure in response to actuation of the actuator.

In various embodiments, the primary inflatable structure defines a first inflatable volume, the first secondary inflatable structure defines a second inflatable volume, and the second secondary inflatable structure defines a third inflatable volume.

In various embodiments, the first secondary inflatable structure comprises a first longitudinal tube extending generally parallel to a first siderail of the primary inflatable structure, a first lateral tube fluidly coupled to the first longitudinal tube, a first support tube extending between the first longitudinal tube and the first siderail, and a first support structure coupled the first longitudinal tube. The first support structure is configured to be drawn taught in response to inflation of the first secondary inflatable structure. The second secondary inflatable structure comprises a second longitudinal tube extending generally parallel to a second siderail of the primary inflatable structure, a second lateral tube fluidly coupled to the second longitudinal tube, a second support tube extending between the second longitudinal tube and the second siderail, and a second support structure coupled the second longitudinal tube. The second support structure is configured to be drawn taught in response to inflation of the second secondary inflatable structure.

The foregoing features and elements may be combined in various combinations without exclusivity, unless expressly indicated otherwise. These features and elements as well as the operation thereof will become more apparent in light of the following description and the accompanying drawings. It should be understood, however, the following description and drawings are intended to be exemplary in nature and non-limiting.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the detailed description and claims when considered in connection with the figures, wherein like numerals denote like elements.
FIG. 1 illustrates an aircraft having an evacuation system, in accordance with various embodiments;
FIGs. 2A and 2B illustrate a topside view and an underside view, respectively, of an inflatable slide-raft in a deployed slide-mode position, in accordance with various embodiments;
FIGs. 3A and 3B illustrate a topside view and an underside view, respectively, of an inflatable slide-raft in a deployed raft-mode position, in accordance with various embodiments; and
FIG. 4 illustrates a topside view of an inflatable slide-raft in a deployed slide-mode position, in accordance with various embodiments.

### DETAILED DESCRIPTION

The detailed description of exemplary embodiments herein makes reference to the accompanying drawings, which show exemplary embodiments by way of illustration. While these exemplary embodiments are described in sufficient detail to enable those skilled in the art to practice the exemplary embodiments of the disclosure, it should be understood that other embodiments may be realized and that logical changes and adaptations in design and construction may be made in accordance with this disclosure and the teachings herein. Thus, the detailed description herein is presented for purposes of illustration only and not limitation. The steps recited in any of the method or process descriptions may be executed in any order and are not necessarily limited to the order presented.

Furthermore, any reference to singular includes plural embodiments, and any reference to more than one component or step may include a singular embodiment or step. Also, any reference to attached, fixed, connected or the like may include permanent, removable, temporary, partial, full, and/or any other possible attachment option.

Surface cross hatching lines may be used throughout the figures to denote different parts but not necessarily to denote the same or different materials. Throughout the present disclosure, like reference numbers denote like elements. Accordingly, elements with like element numbering may be shown in the figures but may not necessarily be repeated herein for the sake of brevity.

Disclosed herein is an inflatable slide-raft for an evacuation system. The slide-raft can operate in a "slide-mode" during a non-water landing and in a "raft-mode" in the event of a water landing. The slide-raft includes a primary inflatable structure, which is configured to be inflated in response to deployment of the evacuation system and operates as the slide when in the slide-raft is in slide mode. The slide-raft further includes two secondary inflatable structures, which are configured to inflate if raft-mode is desired and to remain deflated when the slide-raft is operating in slide mode.

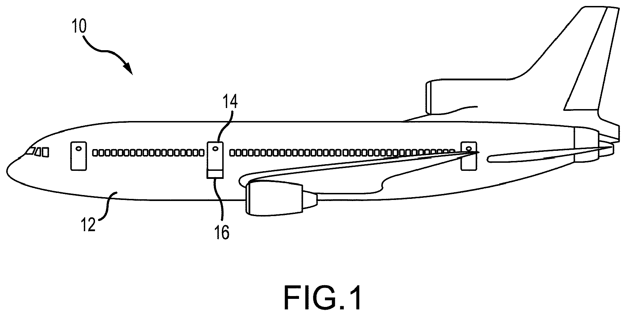

Referring now to FIG. 1, an aircraft 10 is shown. Aircraft 10 may include a fuselage 12 having plurality of exit doors, including an exit door 14. Aircraft 10 may include one or more evacuation systems positioned near a corresponding exit door. For example, aircraft 10 includes an evacuation system 16 positioned near exit door 14. In the event of an emergency, exit door 14 may be opened by a passenger or crew member of aircraft 10. In various embodiments, evacuation system 16 may deploy in response to exit door 14 being opened or in response to another action taken by a passenger or crew member such as depression of a button, actuation of a lever, or other similar action.

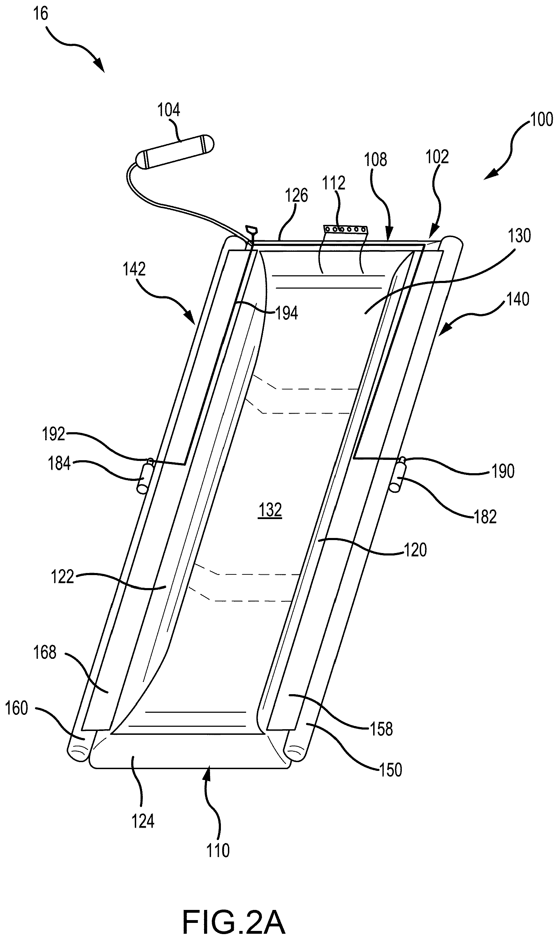

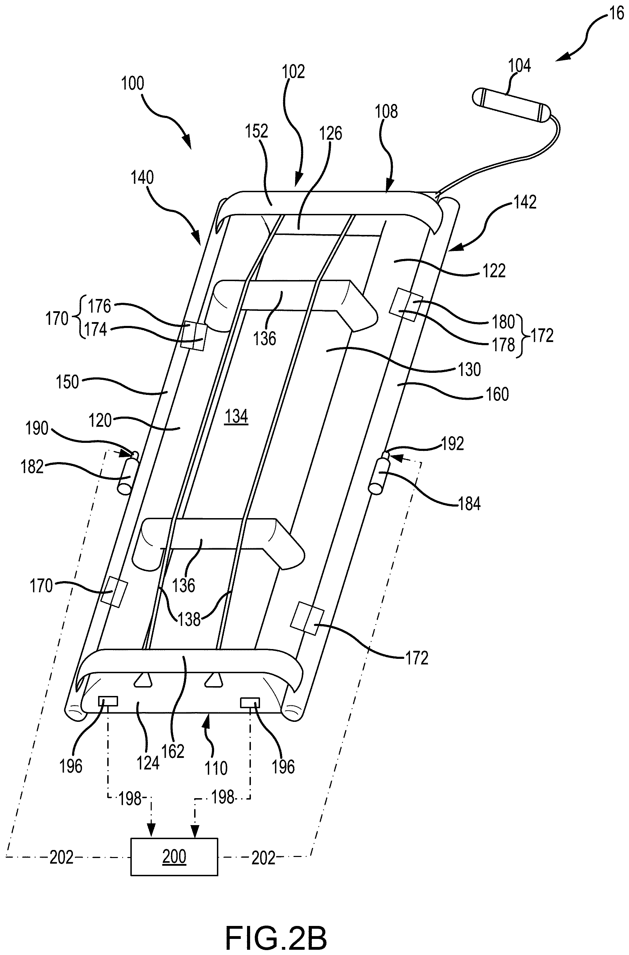

With reference to FIGs. 2A and 2B, evacuation system 16 is illustrated with an inflatable slide-raft 100 of evacuation system 16 in an inflated or "deployed" position. In FIGs. 2A and 2B, slide-raft 100 is depicted in a "slide mode." FIG. 2A illustrates a topside view of slide-raft 100 in slide model. FIG. 2B illustrates an underside view of slide-raft 100 in slide mode.

In accordance with various embodiments, slide-raft 100 includes a primary (or first) inflatable structure 102. Primary inflatable structure 102 is inflated upon deployment of slide-raft 100. For example, primary inflatable structure 102 is configured to begin receiving pressurized fluid from a primary (or first) inflation source 104, in response to exit door 14 (FIG. 1) being opened. Primary inflation source 104 of evacuation system 16 is fluidly coupled to primary inflatable structure 102. Primary inflation source 104 is configured to inflate primary inflatable structure 102. Primary inflation source 104 may include a compressed fluid (e.g., a pressurized gas). Upon deployment of evacuation system 16, primary inflation source 104 delivers pressurized gas to primary inflatable structure 102. In various embodiments, an aspirator may be fluidly coupled between primary inflation source 104 and primary inflatable structure 102.

Primary inflatable structure 102 includes a head end 108 and a toe end 110. Toe end 110 is opposite head end 108. Head end 108 may be removably coupled to an aircraft structure (e.g., a door sill) via a girt 112. Primary inflatable structure 102 forms an inflatable slide structure. In accordance with various embodiments, primary inflatable structure 102 includes a first siderail 120, a second siderail 122, a toe rail 124, and a head rail 126. First and second siderails 120, 122 extend longitudinally between head rail 126 and toe rail 124. Toe rail 124 and head rail 126 extend laterally between first siderail 120 and second siderail 122. In various embodiments, girt 112 may releasably couple head rail 126 to the door sill of exit door 14 (FIG. 1). When slide-raft 100 is operated in raft-mode, girt 112 may be decoupled from the door sill, for example, a speed lacing or other securement feature may be released, thereby allowing slide-raft 100 to travel away from aircraft 10.

In various embodiments, first siderail 120 is in fluid communication with second siderail 122, toe rail 124, and head rail 126. Stated differently, first siderail 120, second siderail 122, toe rail 124, and head rail 126 may be fluidly coupled to one another. In this regard, first siderail 120, second siderail 122, toe rail 124, and head rail 126 may form one, interconnected volume that fills with gas upon deployment of slide-raft 100.

Primary inflatable structure 102 further includes a sliding structure 130. Sliding structure 130 forms a sliding surface 132 of slide-raft 100. The sliding surface 132 (and sliding structure 130) extends from head rail 126 to toe rail 124 and from first siderail 120 to second siderail 122. Sliding structure 130 further includes an underside surface 134, which is oriented away from sliding surface 132. While primary inflatable structure 102 is illustrated as forming a single lane slide, it is contemplated and understood that in various embodiments, primary inflatable structure 102 may comprise any number of lanes.

In various embodiments, primary inflatable structure 102 may include one or more transverse tube(s) 136. Transverse tube(s) 136 is/are located over underside surface 134. Stated differently, sliding surface 132 is oriented away from transverse tube(s) 136. Transverse tube(s) 136 extend between first siderail 120 and second siderail 122. Transverse tube(s) 136 is/are in fluid communication with first siderail 120, second siderail 122, toe rail 124, and head rail 126. In this regard, transverse tube(s) 136 may be part of the interconnected volume formed by first siderail 120, second siderail 122, toe rail 124, and head rail 126. In various embodiments, one or more truss strap(s) 138 may be coupled between head rail 126 and toe rail 124. Transverse tube(s) 136 and truss strap(s) 138 may provide structural support and/or reduce buckling of primary inflatable structure 102, when slide-raft 100 is operating in slide mode.

In accordance with various embodiments, slide-raft 100 further includes a first secondary inflatable structure 140 and a second secondary inflatable structure 142. First secondary inflatable structure 140 is coupled to first siderail 120. Second secondary inflatable structure 142 is coupled to second siderail 122. When slide-raft 100 is in slide mode, as shown in FIGs. 2A and 2B, first secondary inflatable structure 140 and second secondary inflatable structure 142 are in a non-inflated or "stowed" position.

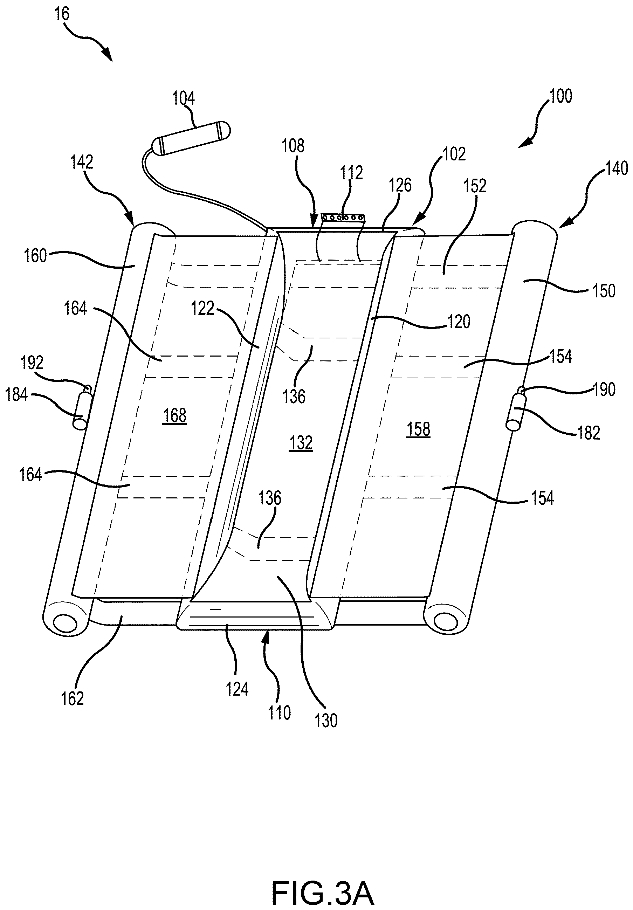

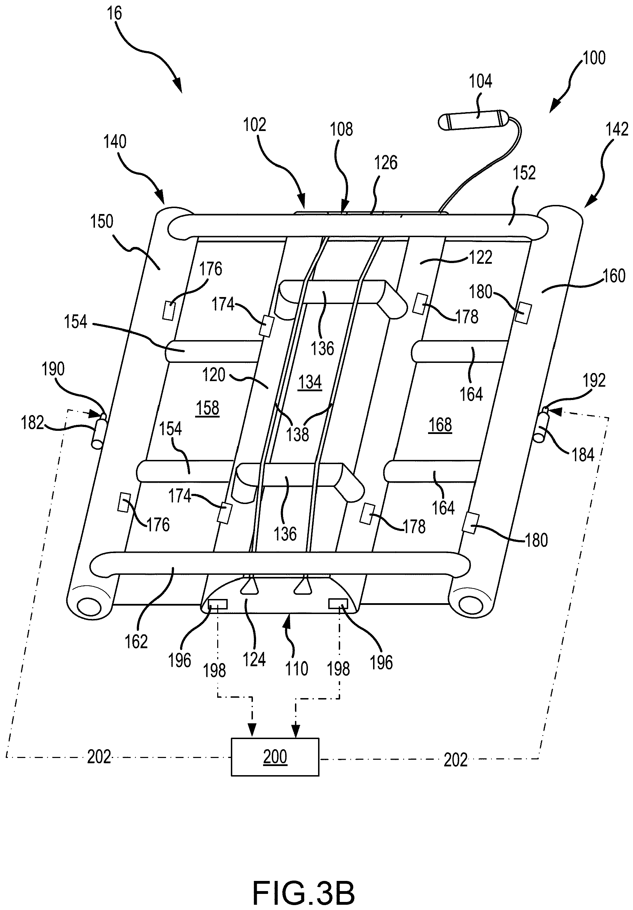

In accordance with various embodiments, first secondary inflatable structure 140 includes a first longitudinal tube 150, a first lateral tube 152, and one or more first support tube(s) 154 (FIGs. 3A and 3B). Second secondary inflatable structure 142 includes a second longitudinal tube 160, a second lateral tube 162, and one or more second support tube(s) 164 (FIGs. 3A and 3B). When slide-raft 100 is in slide mode, first longitudinal tube 150, first lateral tube 152, first support tubes 154, second longitudinal tube 160, second lateral tube 162, and second support tubes 164 are in the non-inflated, stowed position.

With additional reference to FIGs. 3A and 3B, slide-raft 100 is depicted in a "raft mode." FIG. 3A illustrates a topside view of slide-raft 100 in raft mode. FIG. 3B illustrates an underside view of slide-raft 100 in raft mode. In the event of a water landing, first secondary inflatable structure 140 and second secondary inflatable structure 142 are inflated, as described in further detail below.

First longitudinal tube 150 is generally parallel to first siderail 120. As used in the previous context only, "generally parallel" means ±15° from parallel. First lateral tube 152 is coupled between first longitudinal tube 150 and second longitudinal tube 160. First support tubes 154 are coupled between first longitudinal tube 150 and first siderail 120. First longitudinal tube 150 is in fluid communication with first lateral tube 152 and first support tubes 154. Stated differently, first longitudinal tube 150, first lateral tube 152, and first support tubes 154 are fluidly coupled to one another. In this regard, first longitudinal tube 150, first lateral tube 152, and first support tubes 154 may be part of one, interconnected volume. In various embodiments, first secondary inflatable structure 140 is fluidly sealed from primary inflatable structure 102 and second secondary inflatable structure 142. In this regard, first lateral tube 152 is physically attached to second longitudinal tube 160, but there is no fluid connection between first lateral tube 152 and second longitudinal tube 160. Similarly, first support tubes 154 are physically attached to first siderail 120, but there is no fluid connection/communication between first support tubes 154 and first siderail 120.

Second longitudinal tube 160 is generally parallel to second siderail 122. As used in the previous context only, "generally parallel" means ±15° from parallel. Second lateral tube 162 is coupled between second longitudinal tube 160 and first longitudinal tube 150. Second support tubes 164 are coupled between second longitudinal tube 160 and second siderail 122. Second longitudinal tube 160 is in fluid communication with second lateral tube 162 and second support tubes 164. Stated differently, second longitudinal tube 160, second lateral tube 162, and second support tubes 164 are fluidly coupled to one another. In this regard, second longitudinal tube160, second lateral tube 162, and second support tubes 164 may be part of one, interconnected volume. In various embodiments, second secondary inflatable structure 142 is fluidly sealed from primary inflatable structure 102 and first secondary inflatable structure 140. In this regard, second lateral tube 162 is physically attached to first longitudinal tube 150, but there is no fluid connection between second lateral tube 162 and first longitudinal tube 150. Similarly, second support tubes 164 are physically attached to second siderail 122, but there is no fluid connection/communication between second support tubes 164 and second siderail 122.

First secondary inflatable structure 140 further include a first support structure 158. First support structure 158 is coupled to first longitudinal tube 150 and first siderail 120. First support structure 158 is folded or otherwise stowed, when slide-raft 100 is in slide mode. First support structure 158 is drawn taught in response to inflation of first secondary inflatable structure 140 such that first support structure 158 can support passengers when slide-raft 100 is be operated as a life raft (i.e., in raft mode).

Second secondary inflatable structure 142 further include a second support structure 168. Second support structure 168 is coupled to second longitudinal tube 160 and second siderail 122. Second support structure 168 is folded or otherwise stowed, when slide-raft 100 is in slide mode. Second support structure 168 is drawn taught in response to inflation of second secondary inflatable structure 142 such that second support structure 168 can support passengers when slide-raft 100 is be operated as a life raft (i.e., in raft mode).

In various embodiments, one or more first releasable connection(s) 170 may be detachably coupled between first secondary inflatable structure 140 and first siderail 120. One or more second releasable connection(s) 172 may be detachably coupled between second secondary inflatable structure 142 and second siderail 122. First and second releasable connections 170, 172 may be configured to detach, or decouple, in response to inflation of first and second secondary inflatable structures 140, 142, respectively. In FIGs. 2A and 2B, first and second releasable connections 170, 172 are shown in the attached state. In FIGs. 3A and 3B, first and second releasable connections 170, 172 are shown in the detached state.

In various embodiments, first releasable connections 170 each includes a first portion 174 coupled to first siderail 120 and a second portion 176 coupled to first longitudinal tube 150. First portion 174 is releasably coupled to second portion 176. For example, first portion 174 may be releasably coupled to second portion 176 via hook and loop fasteners, snaps, a thread system, speed lacing, tape, or any other releasable fastening system. First portion 174 may separate or decouple from second portion 176 in response to inflation of first secondary inflatable structure 140. For example, in the case of a thread system, the thread system may be stitched in a manner such that a tensile force imparted onto the thread system by inflation of first secondary inflatable structure 140 may undo and/or break the stitching of the thread system.

In various embodiments, second releasable connections 172 each includes a first portion 178 coupled to second siderail 122 and a second portion 180 coupled to second longitudinal tube 160. First portion 178 is releasably coupled to second portion 180 via hook and loop fasteners, snaps, a thread system, speed lacing, tape, or any other releasable fastening system. First portion 178 may separate, or decouple, from second portion 180 in response to inflation of second secondary inflatable structure 142. For example, in the case of a thread system, the thread system may be stitched in a manner such that a tensile force imparted onto the thread system by inflation of second secondary inflatable structure 142 breaks, or undoes, the stitching of the thread system.

In various embodiments, evacuation system 16 further includes a first secondary inflation source 182 configured to inflate first secondary inflatable structure 140 and a second secondary inflation source 184 configured to inflate second secondary inflatable structure 142. First secondary inflation source 182 is fluidly coupled to first secondary inflatable structure 140. Second secondary inflation source 184 is fluidly coupled to second secondary inflatable structure 142. In various embodiments, first and second secondary inflation sources 182, 184 each comprises a solid gas generating material. The solid gas generating material may be configured to provide a gas to first secondary inflatable structure 140 and second secondary inflatable structure 142, respectively, in response to a combustion and/or exothermic reaction of the solid gas generating material. For example, first and second secondary inflation sources 182, 184 may include sodium azide (NaN₃), ammonium perchlorate (NH₄ClO₄), perchloric acid (HClO₄), potassium perchlorate (KClO₄), sodium perchlorate (NaClO₄), sodium chlorate (NaClO₃), potassium chlorate (KClO₃), lithium chlorate (LiClO₃), and/or any suitable solid gas generating material.

Employing solid gas generating materials for first and second secondary inflation sources 182, 184 tends to reduce a size (e.g., volume) of the inflation source as compared to compressed gas cylinders. Further, solid gas generating materials do not have the same maintenance requirements (e.g., they do not have to have their pressure checked and/or certified as often) as compressed gas cylinders. In this regard, using solid gas generating material for first and second secondary inflation sources 182, 184 tends to allow for easier packing of the slide-raft 100, as first and second secondary inflation sources 182, 184 do need not be easily accessible for pressure certification and/or replacement.

In various embodiments, first secondary inflation source 182 may be activated by a first actuator 190. Second secondary inflation source 184 may be activated by a second actuator 192. In this regard, the exothermic reaction that causes the solid gas generating material to begin generating gas may be initiated by actuation of first and second actuators 190, 192. In various embodiments, first and second actuators 190, 192 may be actuated by a passenger or crew member translating (e.g., pulling) cord 194 (FIG. 2A). Stated differently, first and second secondary inflation sources 182, 184 may be activated manually by a passenger or crew member actuating first and second actuators 190, 192. In various embodiments, one or more water sensor(s) 196 may be in communication with first and second actuators 190, 192. Water sensor(s) 196 are configured to detect a presence of water. Water sensors 196 may be coupled to slide-raft 100 and/or to aircraft 10. Water sensors 196 are configured to output a water detection signal 198 in response to detecting water. Water sensors 196 send water detection signal 198 to an actuator controller 200 (shown schematically). Actuator controller 200 is configured to command first and second actuators 190, 192 to actuate, in response to receiving water detection signal 198 from water sensor(s) 196. Stated differently, actuator controller 200 is configured to send actuation commands 202 to first and second actuators 190, 192, in response to receiving water detection signal 198. The actuation of first and second actuators 190, 192 activates first and second secondary inflation sources 182, 184, thereby causing first secondary inflatable structure 140 and second secondary inflatable structure 142 to inflate, respectively.

Because the first secondary inflatable structure 140 and second secondary inflatable structure 142 are inflated by first and second secondary inflation sources 182, 184 and are inflated only when required during water landing scenarios, primary inflation source 104 is sized to inflate only primary inflatable structure 102. Further, because primary inflatable structure 102 is not required to meet life raft capacity and freeboard requirements, primary inflatable structure 102 may be formed having a generally smaller inflation volume, as compared to slides that meet life raft capacity and freeboard requirements. For example, to meet freeboard requirements, current evacuation slide-rafts generally include an upper tube stacked over a lower inflatable tube. The stacked tube structure provides redundancy should either tube fail. For illustrative purpose, a current slide-raft having a width of 40.0 inches (101.6 centimeters (cm)), a length if 300.0 inches (362.0 cm), and a tube diameter of 17 inches (43.2 cm) has an inflatable volume of approximately 5150 liters (L) (e.g., an upper tube inflatable volume of approximately 2850 L and a lower tube inflate volume of approximately 2300 L). As used in the previous context only, "approximately" means ±5% of the associated value. Whereas, primary inflatable structure 102 may meet slide angle and bending strength requirements with an inflation volume of approximately 3100 L. As used in the previous context only, "approximately" means ±5% of the associated value. The smaller inflatable volume of primary inflatable structure 102 tends to lead to faster inflation times and enhanced wind and cold deployment performance.

In accordance with various embodiments, the size (e.g., length, width, tube diameter) of first secondary inflatable structure 140 and of second secondary inflatable structure 142 is selected such that the life raft capacity requirements are met by primary inflatable structure 102 and one of first secondary inflatable structure 140 and second secondary inflatable structure 142. Thus, should either of first secondary inflatable structure 140 or second secondary inflatable structure 142 not inflate due to, for example, a leak in first secondary inflatable structure 140 or in second secondary inflatable structure 142 or a malfunction in first secondary inflation source 182 or in second secondary inflation source 184, the structure provided by primary inflatable structure 102 and the other (i.e., the inflated) of first secondary inflatable structure 140 and second secondary inflatable structure 142 meets the life raft capacity and freeboard requirements. Similarly, in the event of a primary inflatable structure 102 failure, first secondary inflation source 182 and second secondary inflation source 184 meet the life raft capacity and freeboard requirements.

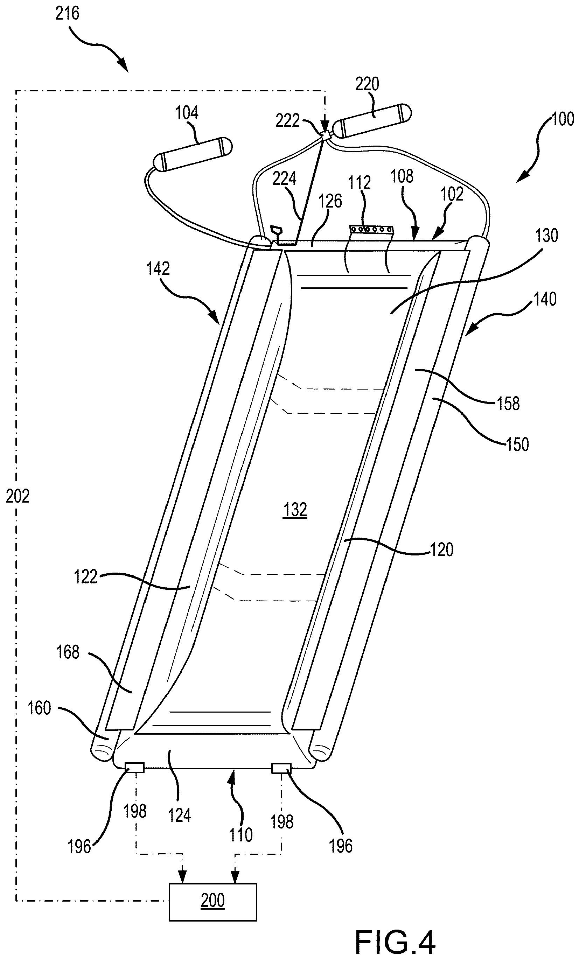

With reference to FIG. 4, an evacuation system 216 is illustrated. Aircraft 10, with momentary reference to FIG. 1, may include evacuation system 216 in place of evacuation system 16. Evacuation system 216 includes inflatable slide-raft 100 and primary inflation source 104, as previously described. Accordingly, elements with like element numbering, as depicted in FIG. 2A are intended to be the same and will not necessarily be repeated for the sake of brevity.

Evacuation system 216 may include a first secondary inflation source 220. First secondary inflation source 220 is fluidly coupled to first secondary inflatable structure 140 and second secondary inflatable structure 142. In various embodiments, first secondary inflation source 220 comprises a compressed fluid source (e.g., a compressed gas cylinder).

First secondary inflation source 220 may be activated by an actuator 222. For example, actuator 222 may translate a valve of first secondary inflation source 220 to an open position. In this regard, first secondary inflation source 220 begins providing pressurized fluid to first secondary inflatable structure 140 and second secondary inflatable structure 142 in response to actuation of actuator 222.

In various embodiments, actuator 222 may be actuated by a passenger or crew member translating (e.g., pulling) a cord 224. Stated differently, first secondary inflation source 220 may be activated by a passenger or crew member manually actuating actuator 222.

In various embodiments, water sensors 196 may be in communication with actuator 222. Water sensors 196 are configured to send water detection signal 198 to actuator controller 200. Actuator controller 200 is configured to command actuator 222 to actuate, in response to receiving water detection signal 198 from water sensors 196. Stated differently, actuator controller 200 is configured to send actuation commands 202 to actuator 222, in response to receiving water detection signal 198. The actuation of actuator 222 causes first secondary inflation source 220 to begin outputting pressurized fluid, thereby causing first secondary inflatable structure 140 and second secondary inflatable structure 142 to inflate. First secondary inflation source 220 is configured to deliver an approximately equal volume of gas to each of first secondary inflatable structure 140 and second secondary inflatable structure 142. For example, a valve or other fluid distribution assembly of first secondary inflation source 220 is configured to distribute gas between first secondary inflatable structure 140 and second secondary inflatable structure 142. Thus, in the event of a failure of one of first secondary inflatable structure 140 and second secondary inflatable structure 142, the other of first secondary inflatable structure 140 and second secondary inflatable structure 142 still inflates to meet the life raft capacity and freeboard requirements.

Benefits and other advantages have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, and any elements that may cause any benefit or advantage to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C.

Systems, methods, and apparatus are provided herein. In the detailed description herein, references to "various embodiments", "one embodiment", "an embodiment", "an example embodiment", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

Furthermore, no element, component, or method step in the present disclosure is intended to be dedicated to the public regardless of whether the element, component, or method step is explicitly recited in the claims. As used herein, the terms "comprises", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

## Claims

1. An inflatable slide-raft, comprising:
a primary inflatable structure (102) including a head rail (126), a toe rail (124), a first siderail (120), and a second siderail (122);
a first secondary inflatable structure (140) coupled to the first siderail (120), wherein the first secondary inflatable structure (140) is fluidly sealed from the first siderail (120); and
a second secondary inflatable structure (142) coupled the second siderail (122),
wherein the second secondary inflatable structure (142) is fluidly sealed from the second siderail (122) and the first secondary inflatable structure (140).

2. The inflatable slide-raft of claim 1, wherein the first secondary inflatable structure (140) comprises:
a first longitudinal tube (150) extending generally parallel to the first siderail (120);
a first lateral tube (152) fluidly coupled to the first longitudinal tube (150); and
a first support tube (154) extending between the first longitudinal tube (150) and the first siderail (120), the first support tube (154) being fluidly coupled to the first longitudinal tube (150).

3. The inflatable slide-raft of claim 2, wherein the second secondary inflatable structure (142) comprises:
a second longitudinal tube (160) extending generally parallel to the second siderail (122);
a second lateral tube (162) fluidly coupled to the second longitudinal tube (160); and
a second support tube (164) extending between the second longitudinal tube (160) and the second siderail (122), the second support tube (164) being fluidly coupled to the second longitudinal tube (160).

4. The inflatable slide-raft of claim 3, wherein the first lateral tube (152) is attached to the second longitudinal tube (160), and wherein the second lateral tube (162) is attached to the first longitudinal tube (150).

5. The inflatable slide-raft of claim 3, wherein the first secondary inflatable structure (140) further comprises a first support structure (158) coupled between the first longitudinal tube (150) and the first siderail (120), the first support structure (158) being configured to be drawn taught in response to inflation of the first secondary inflatable structure (140), and wherein the second secondary inflatable structure (142) further comprises a second support structure (168) coupled between the second longitudinal tube (160) and the second siderail (122), the second support structure (168) being configured to be drawn taught in response to inflation of the second secondary inflatable structure (142).

6. The inflatable slide-raft of any preceding claim, further comprising:
a first releasable connection (170) coupled between the primary inflatable structure (102) and the first secondary inflatable structure (140); and
a second releasable connection (172) coupled between the primary inflatable structure (102) and the second secondary inflatable structure (142), and preferably wherein a first portion of the first releasable connection (170) is coupled to the first siderail (120) and a second portion the first releasable connection (170) is coupled to the first secondary inflatable structure (140).

7. An evacuation system (16), comprising:
an inflatable slide-raft of any preceding claim;
a primary inflation source (104) fluidly coupled to the primary inflatable structure (102); and
a first secondary inflation source (182) fluidly coupled to at least one of the first secondary inflatable structure (140) and the second secondary inflatable structure (142).

8. The evacuation system of claim 7, further comprising a second secondary inflation source (184) fluidly coupled to the second secondary inflatable structure (142), wherein the first secondary inflation source (182) is configured to inflate the first secondary inflatable structure (140), and preferably wherein the first secondary inflation source (182) and the second secondary inflation source (184) each comprises a solid gas generating material.

9. The evacuation system of claim 7, further comprising an actuator (190) operably coupled to the first secondary inflation source (182).

10. The evacuation system of claim 9, further comprising a cord (194) configured to manually actuate the actuator (190).

11. The evacuation system of claim 9 or 10, further comprising:
an actuator controller (200) configured to send actuation commands to the actuator (190); and
a water sensor (196) in communication with the actuator controller (200).

12. The evacuation system of any of claims 9-11, wherein the primary inflation source (104) is configured to begin inflating the primary inflatable structure (102) in response to deployment of the inflatable slide-raft, and wherein the first secondary inflation source (182) is configured to begin inflating the at least one of the first secondary inflatable structure (140) and the second secondary inflatable structure (142) in response to actuation of the actuator (190).

13. An evacuation system, comprising:
an inflatable slide-raft, the inflatable slide-raft including:
a primary inflatable structure (102) configured to inflate upon deployment of the inflatable slide-raft;
a first secondary inflatable structure (140) coupled to the primary inflatable structure (102); and
a second secondary inflatable structure (142) coupled to the primary inflatable structure (102), wherein the first secondary inflatable structure (140) and the second secondary inflatable structure (142) are configured to remain in a stowed state when the inflatable slide-raft is operated in a slide mode and to inflate when the inflatable slide-raft is operated in a raft mode.

14. The evacuation system of claim 13, further comprising:
a primary inflation source (104) fluidly coupled to the primary inflatable structure (102); and
a first secondary inflation source (182) fluidly coupled to at least one of the first secondary inflatable structure (140) and the second secondary inflatable structure (142), and preferably further comprising an actuator (190) operably coupled to the first secondary inflation source (104), wherein the primary inflation source (104) is configured to begin inflating the primary inflatable structure (102) in response to deployment of the inflatable slide-raft, and wherein the first secondary inflation source (182) is configured to begin inflating the at least one of the first secondary inflatable structure (140) and the second secondary inflatable structure (142) in response to actuation of the actuator (190).

15. The evacuation system of claim 13 or 14, wherein the primary inflatable structure (102) defines a first inflatable volume, and wherein the first secondary inflatable structure (140) defines a second inflatable volume, and wherein the second secondary inflatable structure (142) defines a third inflatable volume, and preferably wherein the first secondary inflatable structure (140) comprises:
a first longitudinal tube (150) extending generally parallel to a first siderail of the primary inflatable structure;
a first lateral tube (152) fluidly coupled to the first longitudinal tube;
a first support tube (154) extending between the first longitudinal tube and the first siderail; and
a first support structure (158) coupled the first longitudinal tube, the first support structure being configured to be drawn taught in response to inflation of the first secondary inflatable structure; and
wherein the second secondary inflatable structure (142) comprises:
a second longitudinal tube (160) extending generally parallel to a second siderail of the primary inflatable structure;
a second lateral tube (162) fluidly coupled to the second longitudinal tube;
a second support tube (164) extending between the second longitudinal tube and the second siderail; and
a second support structure (168) coupled the second longitudinal tube, the second support structure being configured to be drawn taught in response to inflation of the second secondary inflatable structure.
